Europäisches Patentamt

European Patent Office

Office européen des brevets

(19)

(11) Publication number: **0 114 434**

**A1**

(12) # EUROPEAN PATENT APPLICATION

(21) Application number: **83201782.6**

(22) Date of filing: **15.12.83**

(51) Int. Cl.³: **C 08 F 10/00**
**C 08 F 4/70**

(30) Priority: **17.12.82 NL 8204876**

(43) Date of publication of application:
**01.08.84 Bulletin 84/31**

(84) Designated Contracting States:
**AT BE DE FR GB IT NL SE**

(71) Applicant: **STAMICARBON B.V.**
**Postbus 10**
**NL-6160 MC Geleen(NL)**

(72) Inventor: **Coosemans, Luc Maria Constant**
**Ringlaan 18**
**B-3530 Houthalen(BE)**

(72) Inventor: **van de Leemput, Lambertus J. M. A.**
**Imkerstraat 16**
**NL-6101 GW Echt(NL)**

(74) Representative: **De Boer, Jan et al,**
**OCTROOIBUREAU DSM Postbus 9**
**NL-6160 MA Geleen(NL)**

(54) Catalyst and polymerization of olefins with that catalyst.

(57) The invention relates to a catalyst composition for the (co)polymerization of ethylene, if so desired with at most 15 moles % of one or more $\alpha$-alkenes having 3-15 carbon atoms in an inert solvent at temperatures above 110°C with a catalyst composed of an organoaluminium halogen compound with the general formula $R_{3-m}AlX_m$, where the symbols R are the same or different each representing a hydrocarbon group having 1-30 carbon atoms, each X represents a halogen atom and $0 < m < 3$, an organomagnesium compound in which at least one hydrocarbon group having 1-30 carbon atoms is bonded to magnesium and a tetravalent titanium compound and/or a pentavalent vanadium compound, which catalyst composition is obtained by mixing the organomagnesium compound in an inert solvent with a dissolved halogen-free nickel compound, mixing the mixture thus obtained with the organoaluminium halogen compound, and bringing the product thus obtained together with the titanium and/or vanadium compounds.

EP 0 114 434 A1

CATALYST AND POLYMERIZATION OF OLEFINS WITH THAT CATALYST

The invention relates to new catalyst compositions for the polymerization of $\alpha$-alkenes, particularly the polymerization of ethylene with or without minor quantities of at most 15 moles % of one or more $\alpha$-alkenes having 3-15 carbon atoms, on the basis of an organoaluminiumhalogen compound with the general formula of $R_{3-m}AlX_m$, where the symbols R are the same or different, each representing a hydrocarbon group having 1-30 carbon atoms, and each X represents a halogen atom, and m is higher than 0 and lower than 3, an organomagnesium compound in which at least 1 hydrocarbon residue having 1-30 carbon atoms is bonded to magnesium, and a tetravalent titanium compound and/or pentavalent vanadium compound, as well as to the preparation of such catalyst compositions. The invention also relates to the polymerization of alkenes, particularly the polymerization of ethylene, if so desired with minor quantities of at most 15 moles % of one or more $\alpha$-alkenes having 3-15 carbon atoms, with such a catalyst composition in an inert solvent at temperatures higher than 110 °C so that a solution of the ethylene(co)polymer is obtained.

Such catalyst compositions and the polymerization of $\alpha$-alkenes, particularly of ethylene, with these are described in the British patent specification 1235062, 1235063, 1251177.

Similar catalysts and the polymerization of ethylene with these at such high temperatures that in the solvent a solution of the polymer is obtained are described also in the British patent specifications 1492379 and 1500873.

For a number of years the interest in and the use of copolymers of ethylene with $\alpha$-alkenes having at least 5 carbon atoms in such large quantities that the density of the resulting copolymer is lower than 0.940, and more specifically lower than 0.935, have strongly increased. Such copolymers are often referred to as LLDPE, an abbreviation of linear low-density polyethylene. Not only in density does the LLDPE show more similarity to the LDPE (low-density polyethylene) produced according to a high-pressure process known for long than to polyethylene grades obtained by polymerization in the presence of transition metal catalysts, which are often referred to as HDPE, but it also has properties showing strong similarity to LDPE. For instance, it can very well be processed to form sheets and is often produced and marketed as sheet or film grade.

LLDPE can be prepared according to processes known per se for the polymerization of ethylene with transition metal catalysts, but the presence of higher $\alpha$-alkenes in the polymerization mixtures has been found in a number of customary processes to present difficulties. For instance, the substantially higher boiling point of, for example, hexene or octene compared with propylene or butylene as comonomer presents difficulties in the so-called gas phase polymerization, because in this process these higher comonomers will easily condense on the cooling elements in the reactor and will thus disturb a proper progress of the polymerization. In the suspension polymerization, too, the presence of higher $\alpha$-alkenes is often disturbing.

The polymerization of ethylene with higher $\alpha$-alkenes, particularly with $\alpha$-alkenes having at least 5 carbon atoms, preferably hexene or octene, can very well be performed according to a so-called solution polymerization, i.e. a polymerization at temperatures higher than 110 °C, in which process a solution of the ethylene(co)polymer is obtained. Such a solution polymerization can be performed already at temperatures of 120 to 130 °C, but generally preference is given to effecting it at temperatures of at least 150 °C. From the point of view of saving energy costs, it is desirable for the temperatures to be as high as possible. The reactor feed consisting of solvent, monomer and comonomer and minor quantities of other components (for instance the catalyst) may be at ambient temperature when, for instance, supplied into the reactor. Without cooling of the reactor contents, the temperature of the reactor contents will rise strongly to temperatures of, for instance, 200 °C or even higher. For the recovery of the polymer by evaporation of the solvent such high temperatures are favourable, for only little or no heat of evaporation need then be supplied any more. As the temperature rises and as it approaches, or even exceeds, the critical temperature of solvent and comonomers, the heat of evaporation of solvent and comonomers will be lower, so that for the evaporation thereof the energy requirements will be smaller.

It has been found that, as the polymerization temperature rises, while the polymerization conditions are otherwise maintained, the molecular weight of the polymer decreases. In suspension polymerizations the molecular weight of the resulting polyalkene is often so high that it can no longer be properly processed, and therefore hydrogen is generally used as molecular weight regulator to lower the molecular weight and to raise the melt index (ASTM D-1238). In solution polymerizations, particularly at relatively high temperatures of for instance 200 °C, a restriction of the grades of polymer that can be produced with these has now been found to occur, because grades of a relatively high molecular weight can no longer be produced. This objection will make itself felt more when copolymers are to be prepared, for the comonomers, in particular the higher alkenes having at least 5 carbon atoms, have been found also to act as molecular weight regulators, and as a larger quantity of comonomer is used, the molecular weight of the copolymer to be prepared will be lower.

It has been found that, in the polymerization of ethylene, under otherwise the same polymerization conditions, if so desired with minor quantities of at most 15 moles % of one or more $\alpha$-alkenes having 3 to 15 carbon atoms, in an inert solvent at temperatures above 110 °C, so that a solution of the ethylene(co)polymer is obtained, with a catalyst composed of an organoaluminiumhalogen compound with the general formula of $R_{3-m}AlX_m$, where the symbols R are the same or different, each representing a hydrocarbon group having 1-30 carbon atoms, and each X represents a halogen atom and m is higher than 0 and lower than 3, an organomagnesium compound in which at least one hydrocarbon residue having 1-30 carbon atoms is bonded to magnesium and a tetravalent titanium compound and/or a pentavalent vanadium compound, is it possible to prepare ethylene(co)polymers having a higher molecular weight respectively a lower melt index (ASTM D-1238) by using a catalyst obtained by, and this characterizes the invention, mixing the organomagnesium compound in an inert solvent with a dissolved halogen-free nickel compound, mixing the mixture thus obtained with the organoaluminiumhalogen compound and bringing the product thus obtained together with the titanium and/or vanadium compounds, the chosen quantities of the components being such that the nickel-titanium atom ratio is at least 0.01 and at most 0.8, the magnesium-titanium atom ratio at least 1 and at most 100 and the aluminium-magnesium atom ratio at least 0.5 and at most 10.

The mixture of the nickel, magnesium and aluminium components can be combined with the transition metal component(s) and the catalyst composition can then be fed into the polymerization reactor. The said mixture and the transition metal component(s) can, however, also first be brought together in the reactor by feeding them into the reactor as separate streams.

The invention also relates to a process for the preparation of the above-mentioned catalyst compositions and to such catalyst compositions.

The chosen quantities of the catalyst components are preferably such that the nickel-titanium ratio is 0.05-0.75, the magnesium-titanium ratio 2-20, the aluminium-magnesium ratio 2 to 5 and the aluminium-titanium ratio 4 to 100. More specifically the aluminium-magnesium ratio is $\dfrac{B}{m - A}$, in which formula m is the number of halogen atoms per aluminium atom of the alkylaluminiumhalogen compound, A a number from -0.75 to +0,97 and B a number from 2.2 to 2.7. All ratios are molar ratios.

In the European patent application 9160 catalyst compositions are described containing, in addition to an organomagnesium compound, an alkylaluminiumhalogenide and a titanium compound, a nickel compound as well. This nickel compound is a nickelhalogenide, specifically nickelchloride. The nickelchloride is used as such or is first formed in situ by the conversion of another nickel compound with a chloride, specifically an alkylaluminiumchloride. The quantities used at least equal, on a molar basis, the quantity of transition metal (titanium) and aim at widening the molecular weight distribution.

According to the present invention an increase of the molecular weight is realized by adding a quantity of nickel compound less than equivalent to the titanium compound, which is converted in the form of a dissolved nickel compound with a magnesiumalkyl, in which process, in a manner similar to that in which aluminiumalkyls are used, lower than bivalent to even zerovalent nickel complexes are formed, as described in the publication of Fischer, Jonas, Misbach, Stabba and Wilke in Angew. Chem. 85 (1973) 1002-1012. When the quantity of nickel is increased in respect of the quantity of titanium, the catalyst activity is found to decrease rapidly. With a 1 : 1 ratio only negligible quantities of polyethylene are formed.

The halogen-free nickel compound used is preferably a nickel compound soluble in an inert organic solvent. Inert organic solvents are preferably aliphatic, alicyclic or aromatic hydrocarbons or mixtures thereof, more specifically aliphatic hydrocarbons, such as hexanes, heptanes, or hydrocarbon fractions, such as light or heavier petrol, and the like as they are used on a large scale in the preparation on a technical scale of ethylene and other olefin polymers.

Many nickel compounds can be dissolved in a hydrocarbon solvent by for instance complexing with an organometallic compound.

The halogen-free nickel compound used may, for instance, be nickelcarboxylates having 2-12 carbon atoms or nickel-1.3-diketo compounds with the formula $Ni(OCR_1CR_2CR_3O)_2$, where $R_1$, $R_2$ and $R_3$ are the same or different, each representing an alkyl group having 1-10 carbon atoms, and where, moreover, $R_2$ may represent a hydrogen atom, such as specifically nickelacetylacetonate. Nickelcarboxylates such as, for instance, nickel-2-ethyl-hexanolate or naphthenate, are often already soluble in hydrocarbons without complexing. In many cases the solubility can be improved by complexing, as specifically of the nickelacetylacetonate, which is preferably complexed with organometallic compounds of metals from groups I, II or III of the periodic system such as, for instance, aluminiumalkyls or magnesiumalkyls. Suitable aluminiumalkyls are triisobutylaluminium or trioctylaluminium, specifically aluminiumalkyls having at least 4 carbon atoms per alkyl group. Dialkylaluminiumhydrides can be used also. Suitable magnesiumalkyls are dibutylmagnesium, dihexylmagnesium, butylethylmagnesium, but here again, of course, other magnesiumalkyls, specifically those having at least 4 carbon atoms per alkyl group, are quite suitable. The atom ratio between nickel and metal in the complexing metalalkyl may vary within wide limits, but is in general preferably about 1 : 2. This exposition does not exclude the use of other halogen-free nickel compounds not mentioned here. On the contrary, each halogen-free nickel coumpound is included also, particularly each compound soluble in inert organic solvents.

Organomagnesium compounds incorporated in the present catalyst compositions are preferably compounds with the formula $MgR'_2$, where the symbols R' are the same or different, each representing a hydrocarbyl group having 1-30 carbon atoms, while, if one hydrocarbyl group contains 1-3 carbon atoms, the other will contain at least 4 carbon atoms. The hydrocarbyl group or groups represented by R' are alkyl groups, aryl groups, cycloalkyl groups, alkenyl groups or alkadienyl groups and preferably alkyl or cycloalkyl groups. The groups represented by R' need not all of them be alike.

Examples of magnesium compounds that may be incorporated in the present catalyst compositions are dibutyl or diisobutylmagnesium, diamylmagnesium, diisoamylmagnesium, dihexylmagnesium, dioctylmagnesium, etc., but also didecylmagnesium, didodecylmagnesium, as well as dicycloalkylmagnesium compounds with the same or different cycloalkyl groups having 3-12 carbon atoms and preferably 5 or 6 carbon atoms. For practical reasons, for instance increased solubility, lower viscosity, etc., magnesiumdialkyls having various alkyl groups, for instance ethyloctylmagnesium, ethylbutylmagnesium, etc., can sometimes be used to advantage also. An alkyl and a cycloalkyl group, too, may be bonded to magnesium. Of the aromatic magnesium compounds particular reference is made to diphenylmagnesium, though other compounds, such as ditolyl and dixylylmagnesium, as well as magnesiumaryls derived from compounds having two or more condensed or non-condensed aromatic nuclei, can be used also. The diarylmagnesium compounds are not soluble in aliphatic hydrocarbons, but they are in aromatic hydrocarbons. Preference is given to the use of a dialkylmagnesium having two equal alkyl groups having 4-10 carbon atoms each. Such magnesiumdialkyl, and specifically solutions thereof in hydrocarbon solvents, can be prepared according to the process of the Netherlands patent application 69.08526, or according to any other suitable process for the preparation of solutions free of ether.

The organoaluminiumhalogen compounds are preferably bromides or chlorides and more specifically chlorides. The hydrocarbyl group respectively groups represented by R in the formula $R_{3-m}AlX_m$ are preferably straight or branched alkyl groups, which need not be alike. Generally they are alkyl groups having 2-8 carbon atoms and particularly ethyl or isobutyl groups. For instance, monoethylaluminiumdichloride, sesquiethylaluminiumchloride or diethylaluminiumchloride can be used, but also the corresponding compounds with other alkyl groups, such as for instance isobutylaluminium compounds. Mixtures of compounds with the said formula can also be started from, and trialkylaluminium compounds, for instance, can be incorporated in such mixtures also.

The titanium compound to be incorporated in the present catalyst compositions is preferably in conformity with the general formula $TiX_n(OR)_{4-n}$, where X represents a halogen, preferably chlorine or bromium and more specifically chlorine, and where R represents an alkyl or aryl group having 1-12 carbon atoms and m has a value of 0-4. In this compound most of the titanium must have the maximum valency, although minor quantities of trivalent titanium may be present, for which the sum of the halogen atoms and the OR groups can, of course, only be 3. Prefernce is given to using a titanium compound having the general formula $Ti(OR)_4$, such as tetrabutoxytitanium or tetraisopropoxytitanium. In addition to the titanium compounds, compounds of other transition metals may be present also, if so desired, particularly of the said vanadium, but also of transition metals such as molybdenum, zircon or chromium, such as for instance $VCl_4$, $VOCl_3$, dialkoxyvanadiumdichloride, $MoCl_5$, $ZrCl_4$. Of these compounds the vanadium compounds are preferred, and these can even be applied exclusively, i.e. without the presence of a titanium compound.

For the use of mixtures of transition metal compounds no restriction has generally been imposed upon the components to be incorporated therein. Any halogenide or alkoxyde or any mixed compound that can be used per se can also be used together with others. Further, titaniumiodide, which is generally not used as such, can be used in mostly minor quantities beside other titanium compounds. In certain cases this has been found to have a favourable effect on the polymer properties.

The polymerization is effected in a manner known per se. Generally the previously prepared catalyst is added in such quantities that the quantity of transition metal in the polymerization medium is 0.001 to 10 mmoles/l and preferably 0.01 to 1 mmole/l.

As dispertant, both in the preparation of the catalyst and for effecting the polymerization, any liquid can be used that is inert in respect of the catalyst system, for instance one or more saturated, straight or branched aliphatic hydrocarbons, such as butanes, pentanes, hexanes, heptanes, pentamethylheptane, or petroleum fractions, such as light or ordinary petrol, isopar, naphtha, kerosine, gasoil. Aromatic hydrocarbons, for instance benzene or toluene or halogenated aliphatic or aromatic hydrocarbons, for instance tetrachloroethane, can be used indeed, but on account of the cost as well as for reasons of safety such solvents will generally not be used in the production on a technical scale. That is why preference is given, in polymerizations on a technical scale, to using, as solvents, the cheap aliphatic hydrocarbons or mixtures thereof as marketed by the petrochemical industry. Pre-treatment of such solvents, for instance drying or purification, is often necessary. The average person skilled in the art will be capable of this per se. Cyclic hydrocarbons, such as cyclohexane, can of course also be used as solvent.

Preference is given to effecting the polymerization at temperatures of 120 to 260 °C, more specifically at temperatures of between 180 and 240 °C.

The polymer solution obtained in the polymerization can be further processed in a manner known per se, in any phase of which further processing the catalyst is generally deactivated. The catalysts according to the present invention are so active that the quantity of catalyst in the polymer, particularly the transition metal content, is so low that generally no catalyst residues need be removed. Of course, the polymer can be subjected to a washing treatment if such is concidered necessary in order to further reduce the residual transition metal content.

The polymerization can be effected continuously or discontinuously at atmospheric pressure, but also at elevated pressure to about 2000 kg/cm$^2$. By polymerizing under pressure the polymer yield can be further increased, which may contribute to preparing a polymer having a very low residual catalyst content. Preference is given to polymerizing under pressures of 1-200 kg/cm$^2$, and more specifically of 10-100 kg/cm$^2$. In the present process modifications known per se can be applied. Thus the molecular weight can, for instance, be regulated by the addition of hydrogen or other modifying agents customary for that purpose. The polymerization can be effected also in steps rather arranged either in parallel or series, in which process different catalyst compositions, temperatures, residence times, pressures, hydrogen concentrations, etc. may be applied if so desired. For instance, products can be prepared having such a wide molecular weight distribution as to have a high flow index by chosing, in one step, such conditions, for instance pressure, temperature and hydrogen concentrations, that the resulting polymer has a high molecular weight, whereas in another step the chosen conditions are such that the resulting polymer has a lower molecular weight.

The invention is further elucidated by the following examples without, however, being restricted by them.

Examples 1-4

In an autoclave having a capacity of 1 l filled completely with petrol (petroleum fraction substantially consisting of heptane) a number of polymerizations are effected. The petrol has been purified over molecular sieves. In an absorber ethylene and hydrogen are dissolved in purified petrol. When ethylene is copolymerized, octene is added to the ethylene and hydrogen-containing flow of petrol to the reactor. The reactor temperature, which is regulated with the jacket heating of the autoclave, is about 180 °C (see table).

As catalyst components an 0.32 mmole solution of nickelacetylacetonate ($Ni(acac)_2$) in toluene, a 7.1 mmole solution of dibutylmagnesium (DBM) in petrol, solubilized with 10 moles % triethylaluminium, a 23.5 mmole solution of sesquiethylaluminiumchloride (SEAC) in petrol and a 1.42 mmole solution of tetrabutoxytitanium (TBT) in petrol are used.

The desired quantities of nickel and magnesium components are mixed together, and this mixture is subsequently combined with the aluminium component and then passed into the reactor. The titanium component is passed into the reactor separately. The pressure in the reactor is set at 23 bar.

The polymerization is carried out continuously by continuous supply of monomer(s), solvent and catalyst and continuous discharge of the polymer solution. The polymer solution is cooled after deactivation of the catalyst. The polymer precipitates and is separated from the solvent.

In example 1 ethylene was homopolymerized. In copolymerization with octene as described in example 3 a copolymer is obtained having a lower molecular weight (higher melt index) than the homopolymer prepared under comparable conditions. By using the catalysts according to the invention (examples 2 and 4) the resulting ethylene polymers will have a higher molecular weight (lower melt index) while, moreover, the monomer conversion increases a bit.

The polymerization conditions, the conversion and the melt index of the polymer are summarized in the table.

## Example 5

Example 2 was repeated on the understanding that 0.04 mmole/l nickelacetylacetonate was incorporated in the catalyst. Only negligible quantities of polymer were formed.

Table

| Example | catalyst mmole/1 | | | | $C_2H_4$ Nl/h | $H_2$ Nl/h | octene g/h | heptane 1/h | temp. °C | conversion | | m.i. |
|---|---|---|---|---|---|---|---|---|---|---|---|---|
| | $Ni(acac)_2$ | DBM | SEAC | TBT | | | | | | % $C_2H_4$ | % $C_8H_{16}$ | |
| 1 | | 0.25 | 0.75 | 0.05 | 1100 | 5.1 | | 9.5 | 177 | 92 | | 11.8 |
| 2 | 0.01 | 0.225 | 0.75 | 0.04 | 1040 | 4.9 | | 9.5 | 178 | 93 | | 6.2 |
| 3 | | 0.25 | 0.85 | 0.05 | 1000 | 1.0 | 420 | 9.5 | 179 | 92 | 13 | 4.1 |
| 4 | 0.011 | 0.225 | 0.75 | 0.045 | 950 | 1.0 | 460 | 9.5 | 179 | 93 | 14.5 | 0.9 |

0114434

## CLAIMS

1. Process for (co)polymerizing ethylene, if so desired with at most 15 moles % of one or more $\alpha$-alkenes having 3-15 carbon atoms in an inert solvent at temperatures above 110 °C, so that a solution of the ethylene(co)polymer is obtained, with a catalyst composed of an organoaluminiumhalogen compound with the general formula of $R_{3-m}AlX_m$, where the symbols R are the same or different, each representing a hydrocarbon group having 1-30 carbon atoms, each X represents a halogen atom and m is higher than 0 and lower than 3, an organomagnesium compound in which at least one hydrocarbon groups having 1-30 carbon atoms is bonded to magnesium and a tetravalent titanium compound and/or a pentavalent vanadium compound, characterized in that a catalyst is used obtained by mixing the organomagnesium compound in an inert solvent with a dissolved halogen-free nickel compound, mixing the mixture thus obtained with the organoaluminiumhalogen compound and bringing the product thus obtained together with the titanium and/or vanadium compounds, the chosen quantities of the components being such that the nickel-titanium atom ratio is at least 0.01 and at most 0.8, the magnesium-titanium atom ratio at least 1 and at most 100 and the aluminium-magnesium atom ratio at least 0.5 and at most 10.

2. Process according to claim 1, characterized in that the nickeltitanium ratio of the catalyst composition used is 0.05-0.6.

3. Process according to claims 1-2, characterized in that the magnesium-titanium ratio of the catalyst composition used is 2-20.

4. Process according to claims 1-3, characterized in that the aluminium-magnesium ratio of the catalyst composition used is 2 to 5 and the aluminium-titanium ratio 4 to 100.

5. Process according to claims 1-3, characterized in that a catalyst composition is used in which the aluminium-magnesium ratio is $\dfrac{B}{m-A}$, where m is the number of halogen atoms per aluminium atom of the alkylaluminiumhalogen compound, A a number from -0.75 to +0.97 and B a number from 2.2 to 2.7.

6. Process for the preparation of an ethylene polymerization catalyst composed of an organoaluminiumhalogen compound with the general formula of $R_{3-m}AlX_m$, where the symbols R are the same or different, each representing a hydrocarbon group having 1-30 carbon atoms, and each X represents a halogen atom and m is higher than 0 and lower than 3, an organomagnesium compound in which at least one hydrocarbon group having 1-30 carbon atoms is bonded to magnesium, and a tetravalent titanium compound and/or pentavalent vanadium compound, characterized in that the organomagnesium compound is mixed in an inert solvent with a dissolved halogen-free nickel compound, the mixture thus obtained is mixed with the organoaluminiumhalogen compound and the product thus obtained is brought together with the titanium and/or vanadium compound, the chosen quantities of the components being such that the nickel-titanium molar ratio is at least 0.01 and at most 0.8, the magnesium-titanium atom ratio at least 1 and at most 100 and the aluminium-magnesium atom ratio at least 0.5 and at most 10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,X | EP-A-0 009 160 (DOW CHEMICAL CY.) *Claims 1,4-6,8,10; page 5, line 29 - page 6, line 11; specially the three last lines; page 11, lines 3-18* | 1-6 | C 08 F 10/00 C 08 F 4/70 |
| | --- | | |
| A | GB-A-1 243 563 (CHISSO CORPORATION) *Claims 1-3; page 1, lines 55-65* | 1-6 | |
| | ----- | | |

**TECHNICAL FIELDS SEARCHED (Int. Cl. ³)**

C 08 F

The present search report has been drawn up for all claims

| Place of search | Date of completion of the search | Examiner |
|---|---|---|
| THE HAGUE | 28-03-1984 | WEBER H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82